# EUROPEAN PATENT SPECIFICATION

(11) **EP 2 615 350 B1**
(45) Date of publication and mention of the grant of the patent: **14.06.2017**
(21) Application number: 12151054.9
(22) Date of filing: 13.01.2012
(51) Int. Cl.: F16L 37/36, F16L 37/32

(54) **Quick coupling with pressure compensation system**
Schnellkupplung mit Druckausgleichssystem
Raccord rapide avec système de compensation de pression

(43) Date of publication of application: 17.07.2013
(73) Proprietor: Faster S.p.A., 26027 Rivolta d'Adda (IT)
(72) Inventor: Danelli, Alessandro, 24053 Brignano Gera D'Adda (IT); Sorbi, Roberto, 26027 Rivolta D'Adda (IT); Rusconi, Paolo, 26027 Rivolta D'Adda (IT)
(74) Representative: Lualdi, Lorenzo

(56) References cited:
- EP-A2- 1 840 443
- US-A- 6 016 835
- US-A1- 2002 106 920

## Description

This invention relates to a quick coupling equipped with a pressure compensation system.

### TECHNICAL FIELD OF THE INVENTION

In the quick couplings field, particularly as relates to the quick couplings used in the agricultural industry to connect agricultural machines to the various work devices, female quick connect devices that connect to female coupling are used, even when there is pressurised fluid in the male fitting.

Such quick couplings are used in particular to connect an hydraulic board circuit of an operating machine to the hydraulic circuit of a removable hydraulic equipment. The female coupling is generally connected to the hydraulic board circuit of the machine while the male fitting is connected to the equipment or service.

It must be highlighted that in the sector, the term "quick coupling" relates to the unit comprising a female coupling and the relevant male fitting, which connect thus forming a quick coupling.

In particular and as previously mentioned, quick couplings having a male fitting that is equipped with a fluid shut-off valve, which is blocked by the pressurised fluid itself at an advanced closed position are used in the sector, while the female coupling has an internal hydraulic system which, following connection and pressurization of the female coupling, opens the valve of the male fitting, and an additional system (mechanical or hydraulic) that blocks both the male and female valves in the "open" position, thus ensuring the passage of the flow of oil.

### BACKGROUND OF THE INVENTION

Among the quick couplings that permit coupling even in the presence of pressurised fluid in the male fitting, the Applicant has, over recent years, developed and marketed special quick couplings comprising a hydraulic locking system of the main valves of the male and female couplings.

According to this existing system of the prior art, once the female coupling has been pressurised and the main valve of the male fitting has consequently been opened, a micro-valve automatically blocks the passage of oil within a specific chamber within the female coupling. The oil trapped in the female coupling prevents the main female valve from moving backwards.

The oil trapped in this chamber is subject (together with the whole quick coupling) to temperature changes, which can sometimes be marked. Take for example application in cold Countries, where the temperature of machines ranges between -35° when not in use and +80 °C in operation.

The temperature changes of the oil generate increased pressure within the closed chamber having a female coupling known to the prior art, which may result in undesired breakdown or malfunction of the fitting itself. A similar coupling is shown e.g. in document US2002/0106920.

### SUMMARY OF THE INVENTION

The chief aspect of this invention is thus to provide a quick coupling, in particular to connect the hydraulic line of a machine to a hydraulic circuit, which eliminates or at least reduces this and other drawbacks that afflict systems known to the prior art.

In particular, within this aspect, the scope of this invention is to provide a quick coupling equipped with a compensation system for the oil expansion resulting from the change in operating temperature of the oil.

### DESCRIPTION OF THE DRAWINGS

This aim and other object which will become clearer from the remainder of the document are achieved by a quick coupling comprising a male fitting and a female coupling, characterised in that said female coupling comprises a compensation system for the changes in pressure of the fluid contained within a special decompression chamber, in accordance with that set out in claim 1.

Further characteristics and advantages of this invention shall become clear in the below detailed description of a preferred embodiment of the invention, which is provided by way of example and is shown in the annexed drawings, wherein:
figure 1 is a longitudinal section assembly view of a first embodiment of the quick coupling according to this invention, in its uncoupled state, with the male and female couplings separate one from the other;
figure 2 shows the section of figure 1, with the male fitting and the female coupling in a first coupled state. Pressurised fluid, represented by the dotted areas, is present within each of the fittings;
figure 3 shows a further stage of the insertion of the male fitting in the female coupling. The main valves of the fittings are still closed and the fittings still contain pressurised fluid;
figure 4 shows a connection stage in which the pressure discharge system of the female coupling is opened by effect of the thrusting action that the main valve of the male fitting exercises on the main valve of the female coupling: pressure is discharged by the female coupling but remains in the male fitting;
figure 5 and figure 6 illustrate subsequent stages of the coupling in respect of figure 4. The main valve of the male fitting is still closed;
figure 7 shows the actual connection: the male fitting as been firmly inserted into the female coupling but remains closed and contains pressurised fluid;
figure 8 shows the pressurisation phase of the female coupling once it has been coupled: the introduction of pressurised fluid within the female coupling causes the main valve of the male fitting to open;
figure 9 shows the quick coupling according to this invention in the operating state wherein the hydraulic line is open and contains fluid. There is pressurised fluid in the decompression chamber, the area representative of which is therefore dotted; figure 10 shows the opening of the compensation system for the changes in pressure of the fluid inside the decompression chamber: the opening of the system allows the pressurised fluid inside the chamber to be discharged;
figure 11 shows the pressurised fluid inside the decompression chamber wherein the fitting is disconnected: only the female coupling is therefore shown;
figures 12 to 17 show the subsequent disconnection stages of the quick coupling according to this invention;

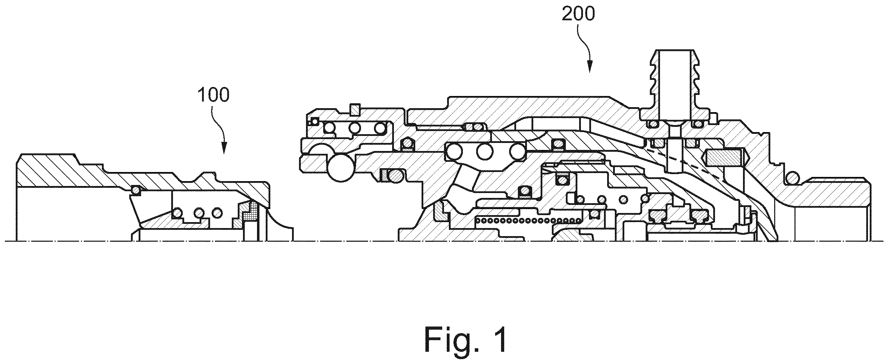

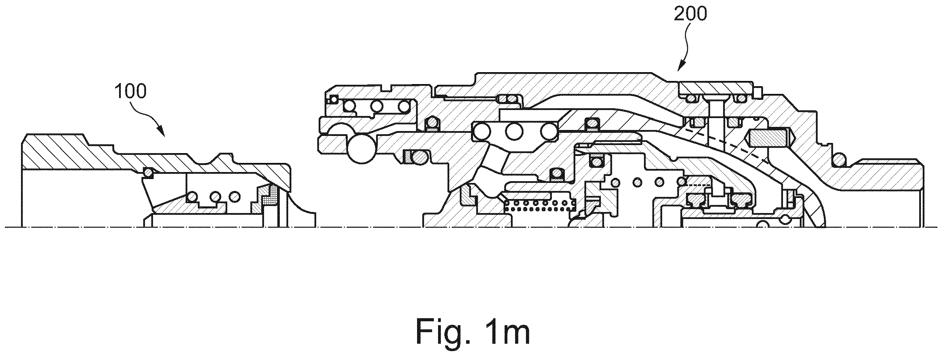

figures 1m to 9m show a second embodiment of the quick coupling according to this invention in the same stages shown by the aforementioned corresponding figures 1 to 9 with reference to a first embodiment of the invention;

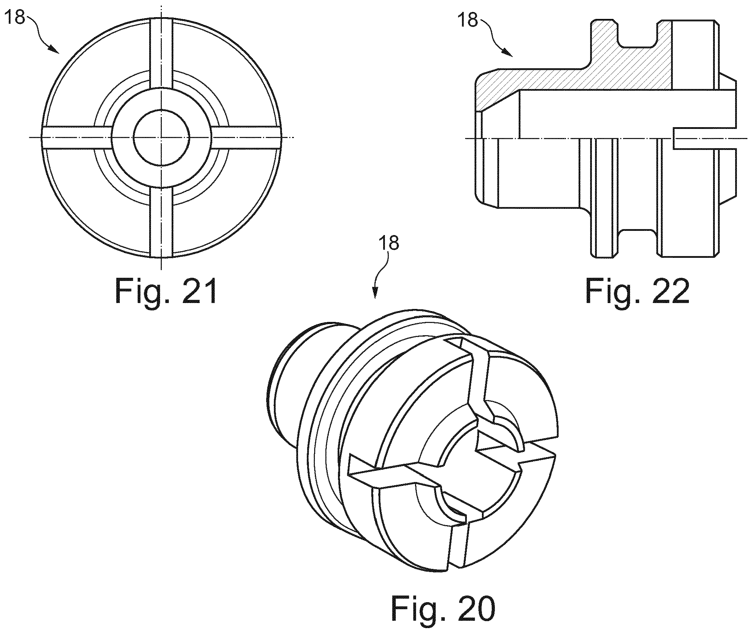

figures 20 to 22 illustrate views of the compensator that characterises the pressure compensation system according to the first embodiment of this invention, shown in figures 1 to 17;

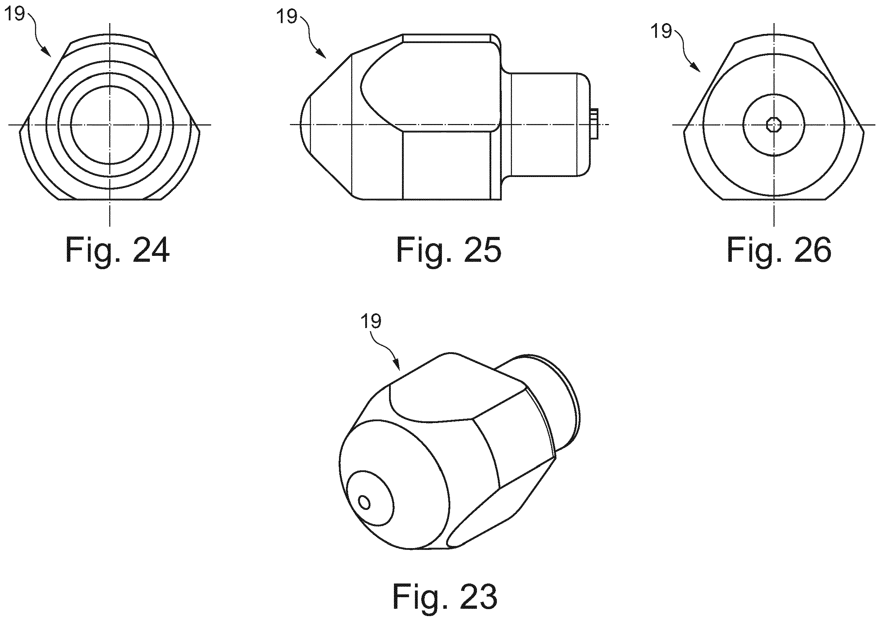

figures 23 to 26 illustrate views of the micro-valve that characterises the pressure compensation system according to the first embodiment of this invention, shown in figures 1 to 17;

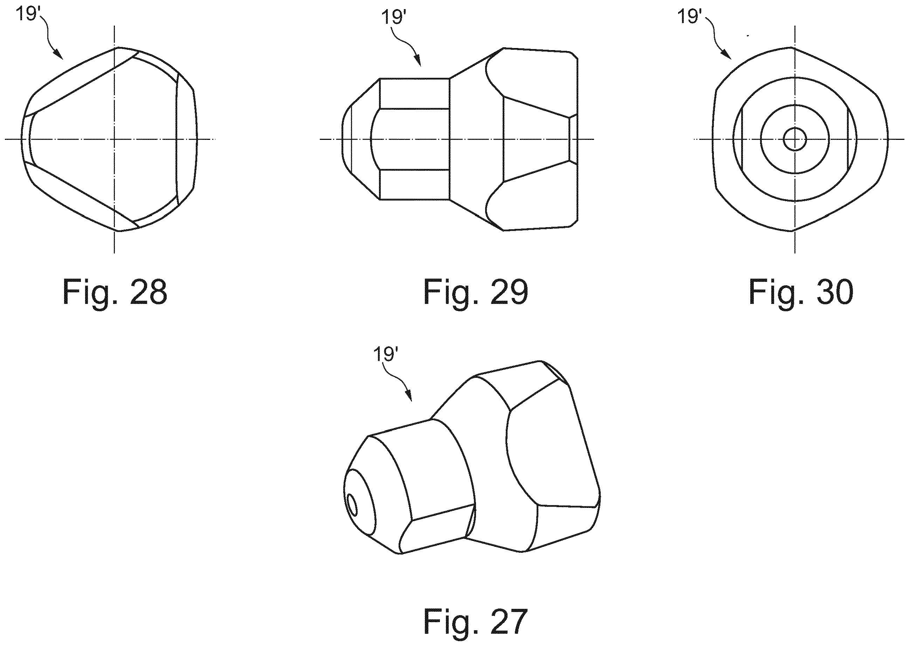

figures 27 to 30 illustrate views of the micro-valve that characterises the pressure compensation system according to the second embodiment of this invention, shown in figures 1m to 9m;

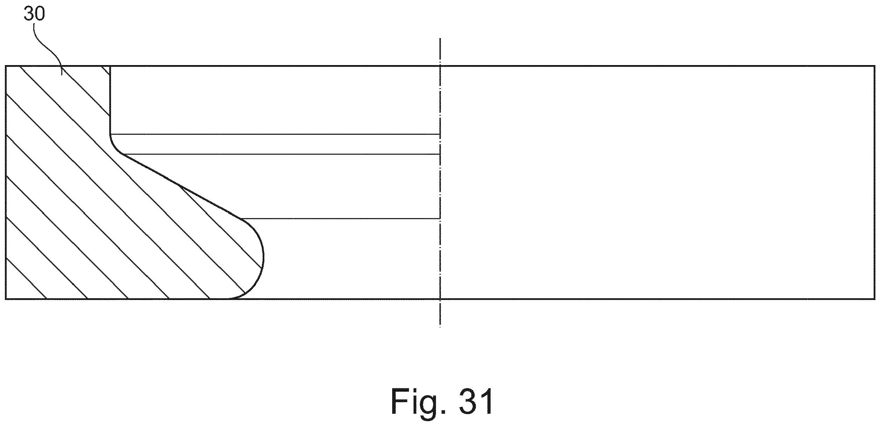

figure 31 is a section view of the membrane that characterises the pressure compensation system according to the first embodiment of this invention, shown in figures 1m to 9m.

### DESCRIPTION OF THE INVENTION

According to a preferred embodiment of this invention shown in the aforementioned drawings provided by way of example, the quick coupling according to this invention comprises a male fitting **100** and a female coupling **200.**

Figure 1 shows the male **100** and female **200** fittings of the quick coupling according to this invention in an uncoupled state.

The male **100** and female **200** fittings that make up the quick coupling according to this invention consist of a front, or anterior, part that is blocked by a main valve, respectively indicated in the drawings by the numbers 1 and 2. For the purposes of this description, the terms "anterior", "posterior", "forward movement", "backward movement" and so forth are indicated in relation to the front and posterior part of each male and female coupling. In particular, when a component moves forward it follows the axial direction of the fitting towards the front or anterior part of the fitting itself, while when a component is said to move backwards, this indicates that it is moving axially towards the posterior part of the fitting, away from the front or anterior part.

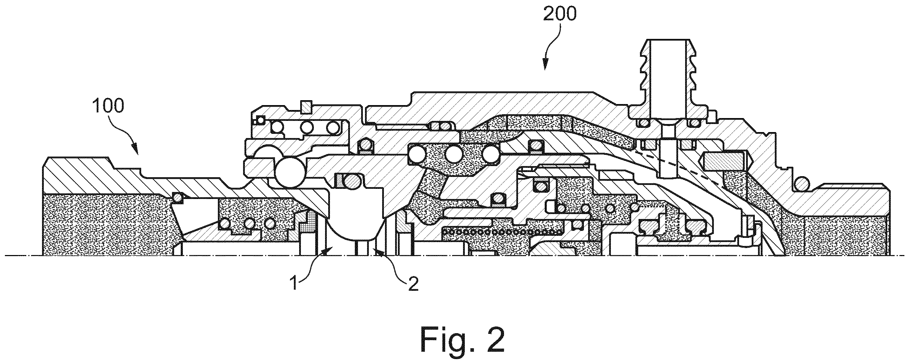

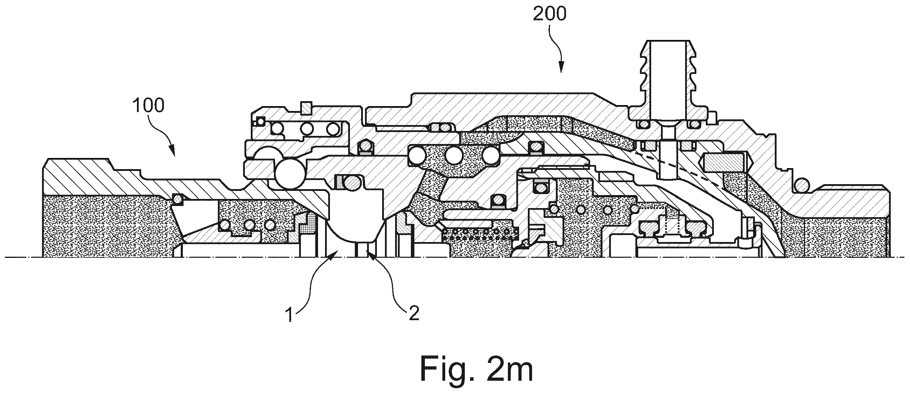

Figure 2 shows the male **100** and female **200** fittings during a first connection stage. In the scenario illustrated by figure 2, the dotted internal areas of the fittings represent pressurised fluid, inside each of the fittings. Figure 2 show a state in which the pressure of the fluid pushes the two main valves of the male fitting **1** and of the female coupling **2,** which thus come into reciprocal contact as shown in figure 2.

The male **100** and female **200** fittings comprise a plurality of moving parts. Thanks to the suitable size of the gasket seals **3** and **4** within the female coupling **200,** and in particular thanks to the fact that said gaskets operate on the same diameters, the hydraulic thrusts within the fitting are completely balanced. The same method is used for decompression gaskets **5** and **6.** All hydraulic thrusts inside the female coupling are thus eliminated with the exception of the thrust that acts on the main vale **2** of the female coupling.

The main valve **1** of the male fitting **100** exerts a pushing action on the main valve **2** of the female coupling and as a direct result of the pressure of the fluid inside the female coupling the following components of the female coupling are moved when the male fitting is coupled to the female coupling: the ball housing **8** of the female coupling and the balls **9** of said ball housing, the gasket **10** that seals the main valve **2,** the valve guide body **11,** the slider **12,** decompression connection **13,** the decompression valve **14,** the spacer **15,** the decompression gaskets **5** and **6,** the spring **17,** the compensator **18** and the micro-valve **19.** All these parts are moved back when the male fitting **100** is inserted into the female coupling **200.** As previously mentioned, this it is thanks to the presence of pressure inside the female coupling that the thrust exerted on the main valve **2** causes the internal parts of the female coupling to move backwards, particularly the decompression gaskets **5** and **6.**

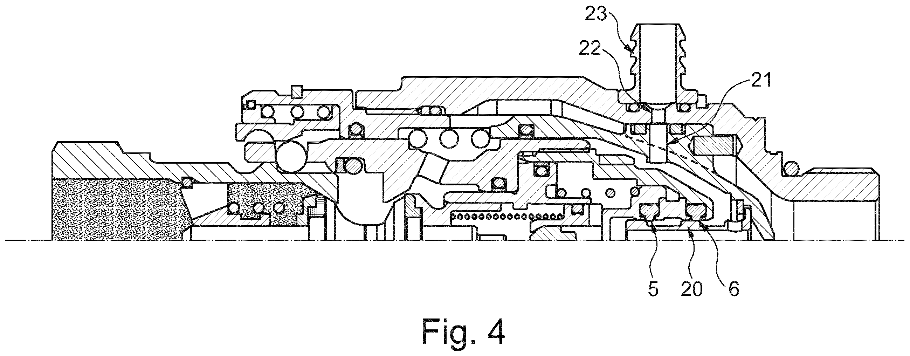

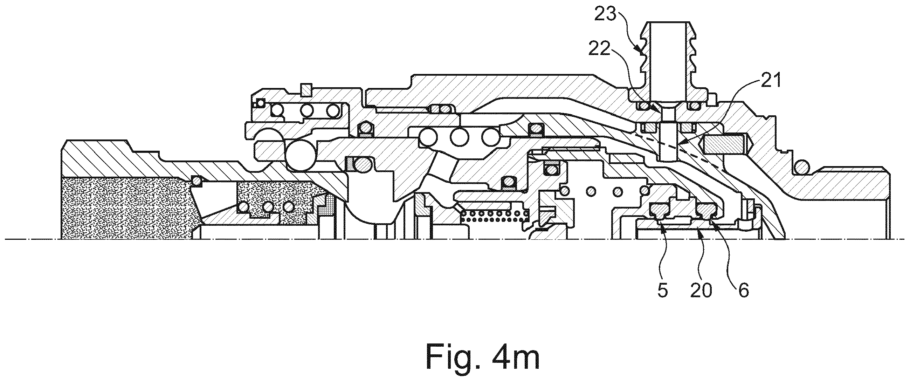

Figure 4 shows the condition in which, continuing with the insertion of the male fitting **100** into the female coupling **200,** the decompression gaskets **5** and **6** of the female coupling each find themselves corresponding with a specifically envisaged groove on the external surface of the stem **20,** on which said decompression gaskets **5** and **6** form a seal. The stem **20** is axially fixed, thus when the decompression gaskets **5** and **6** move backwards by effect of the insertion of the male fitting into the female coupling and reach said grooves, the fluid inside the female coupling flows out via stem **20,** the inner body **21,** the adaptor **22** and the oil-collector **23,** until it reaches the tank of the hydraulic circuit of the machine to which the female coupling is connected.

The pressure inside the female coupling is thus eliminated at which point the pressurised fluid remains only inside the male fitting **100.** This scenario is shown in figure 4, where the dotted areas inside the male fitting **100** are the only areas that still contain pressurised fluid, generally oil.

Figure 4 also shows that eliminating the pressure inside the female coupling **200** causes the main valve **2** of the female coupling to open as the thrust exercised by the main valve **1** of the male fitting is no longer counterbalanced by the pressure of the fluid, which contributed to keeping the main valve **2** in a closed position.

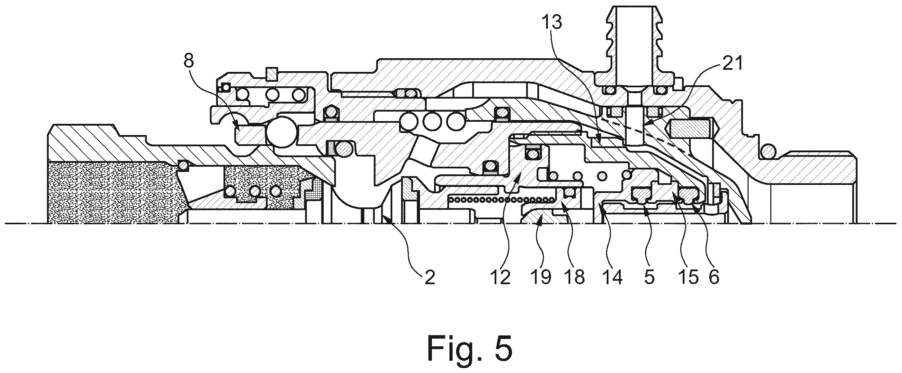

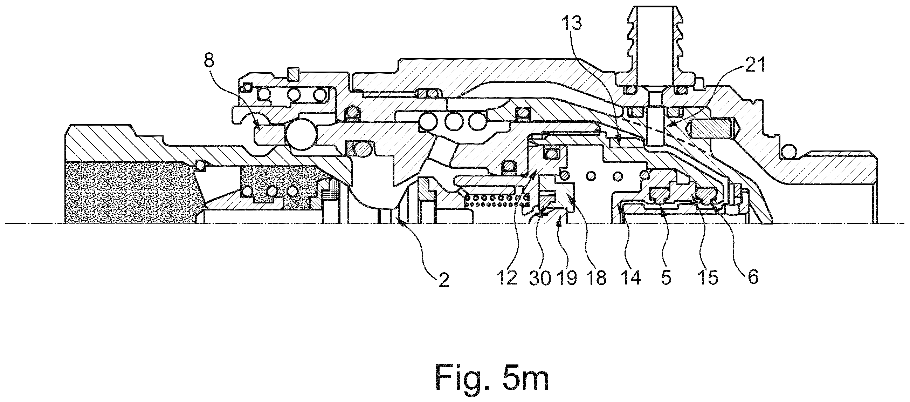

Let us now take a look at figure 5.

Figure 5 shows one condition in which the components of the female coupling, which have been made to move backwards by the insertion thrust of the male fitting, reach the end stop position.

In particular, the ball housing **8,** the slider **12,** the decompression connection **13,** the decompression valve **14,** the spacer **15,** the compensator **18** and the micro-valve **19,** reach the stop position. The mechanical stop that determines the end stop condition arises from contact between the decompression connection **13** and the inner body **21.**

Figure 5 also shows, even more clearly, that in this condition the decompression gaskets **5** and **6** exercise no sealing action. It also more clearly shows the open position of the main valve 2 of the female connection **200.**

The shape of the external surface of the main body of the male connection **24** comprises a groove **24b** for housing the balls **9** of the female connection **200** and a step **24a** that contributes to defining said groove **24b.**

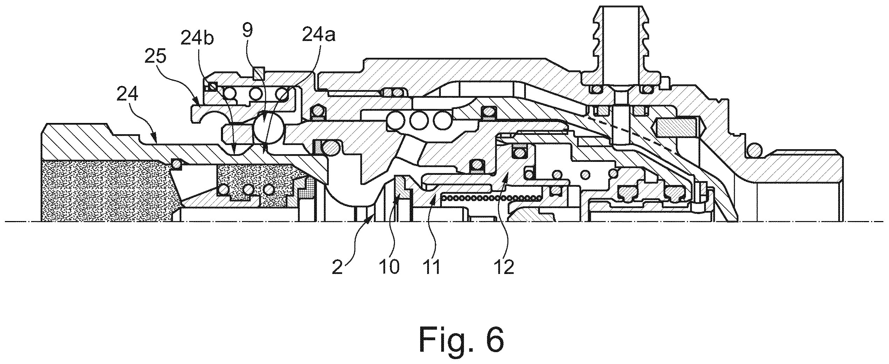

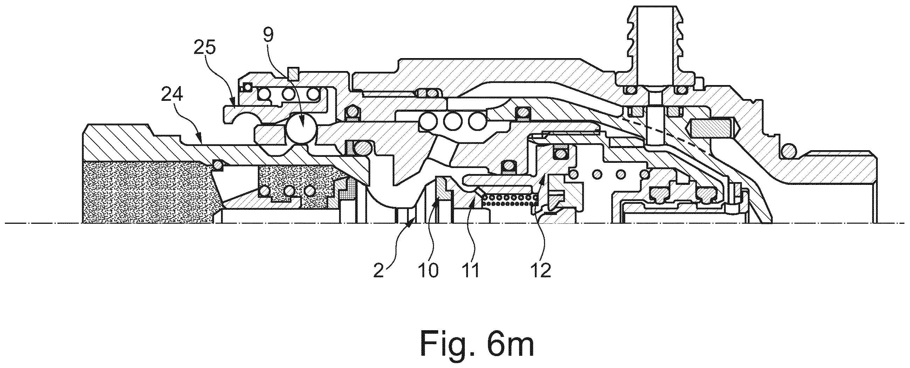

Continuing with the connection stage of the quick coupling, figure 6 shows how said step **24a** pushes the balls **9** outwards in radial direction. The inclined surface of the ring nut slider **25** causes the latter to move in a direction opposite to that of the male fitting.

The group of components of the female coupling **200** comprising a main valve **2,** the gasket **10** of the main valve and the valve-guide **11,** come into contact with the slider **12** thus resulting in a displacement, especially a backwards movement.

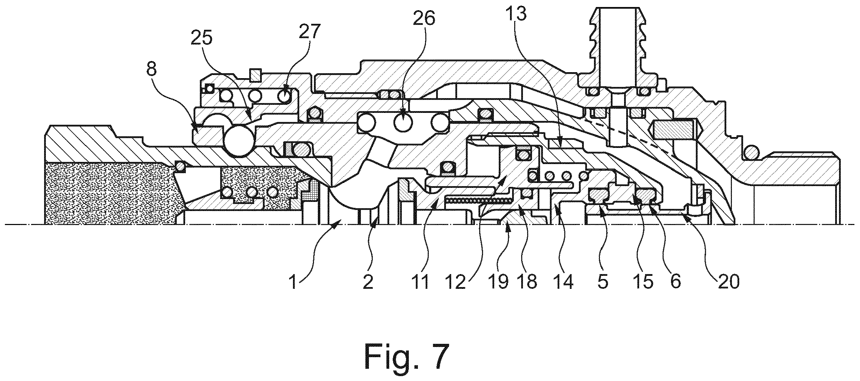

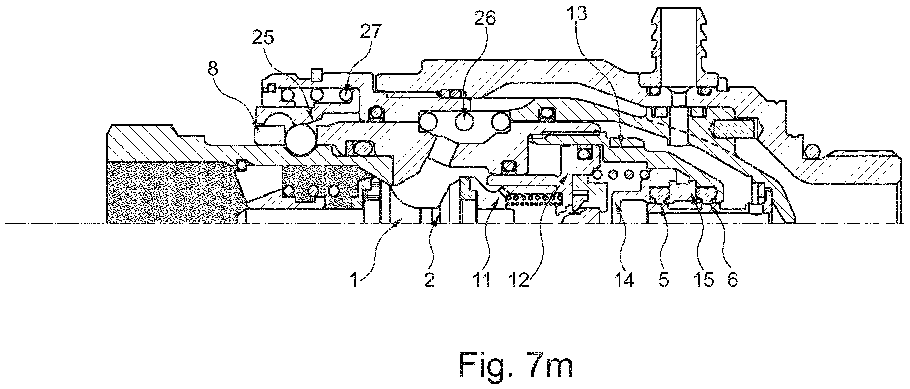

Figure 7 shows the quick coupling according to this invention once connected. The figure therefore shows the condition in which the male fitting **100** is firmly inserted inside the female connection **200,** the balls **9** of the female coupling are pushed by the ring nut slider **25** into the grooves **24b** envisaged on the main body **24** of the male fitting **100,** and the ball housing **8** of the female coupling **200** contributes to keeping said balls in axial constraint, while the ring nut slider **25** keeps them inside the slots **24b** in radial fashion.

Once connected, the group of components comprising the ball housing **8,** the decompression connection **13,** the decompression valve **14,** the spacer **15,** the decompression gaskets **5** and **6** and the compensator **18** are returned to their original positions, corresponding to the scenario of disconnected fitting and closed main valve **2,** due to the action of the return spring **26.**

Similarly, the ring nut slider **25** is returned to its original position by the slider spring **27.**

When the fitting has been connected as shown in figure 7, the slider **12** of the female coupling is in a backward position due to contact with the valve-guide **11.**

The female coupling also comprises, in an axial position, a micro-valve **19** that is internal thereto and axially positioned in respect of said compensator **18,** which is in turn internal thereto and axially positioned in respect of said slider **12,** in respect of which it axially slides. A compensation chamber is thus identified between the slider **12,** the decompression connection **13,** the decompression valve **14,** the decompression gaskets **5** and **6,** the stem **20,** the compensator **18** and the micro-valve **19.**

In the below description reference to this decompression area will also be made via reference to the figures, therefore the decompression area will be indicated in the drawings and will be more easily identified.

Returning to the scenario illustrated in figure 7, the micro-valve **19** is also in an open position due to contact with the main valve **2** of the female coupling. The main valve **2,** kept in a backwards position by the main valve 1 of the male fitting **100,** keeps the micro-valve **19** in a backward position while the compensator **18** is in a forward position in respect of the micro-valve **19,** and is therefore open.

At this stage, the decompression valves **5** and **6** prevent fluid from flowing towards the tank.

Figure 7 also highlights that pressurised fluid is still present inside the male fitting. The pressurised fluid condition is indicated by dotting, as the main valve **1** of the male fitting has not yet been opened.

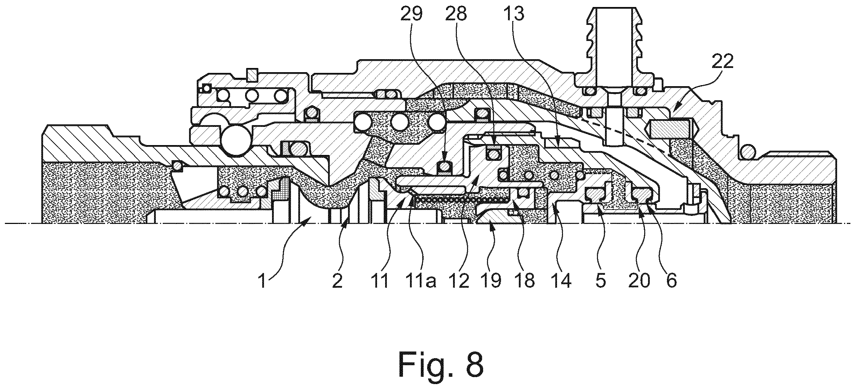

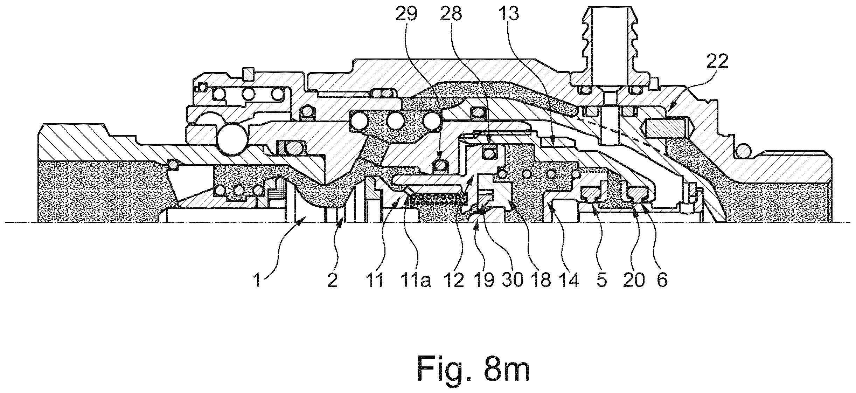

The open stage of the main valve **1** of the male fitting **100** is shown in figure 8.

By pressurising the female coupling **200** by means of the adaptor **22,** the oil passes through a communication hole **11a,** and enters said decompression chamber defined between the slider **12,** the decompression connection **13,** the decompression valve **14,** the decompression gaskets **5** and **6,** the stem **20** and the compensator **18.**

The pressurised oil generates force by virtue of the difference between the sealing diameters of the gaskets **28** and **29.** The force is thus transmitted to the valve-guide **11** and, consequently, to the main valve **2,** which, being in contact with the main valve **1** of the male fitting, causes it to open.

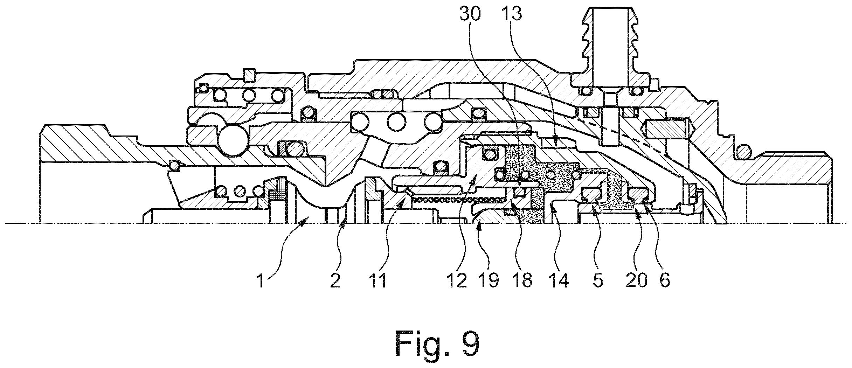

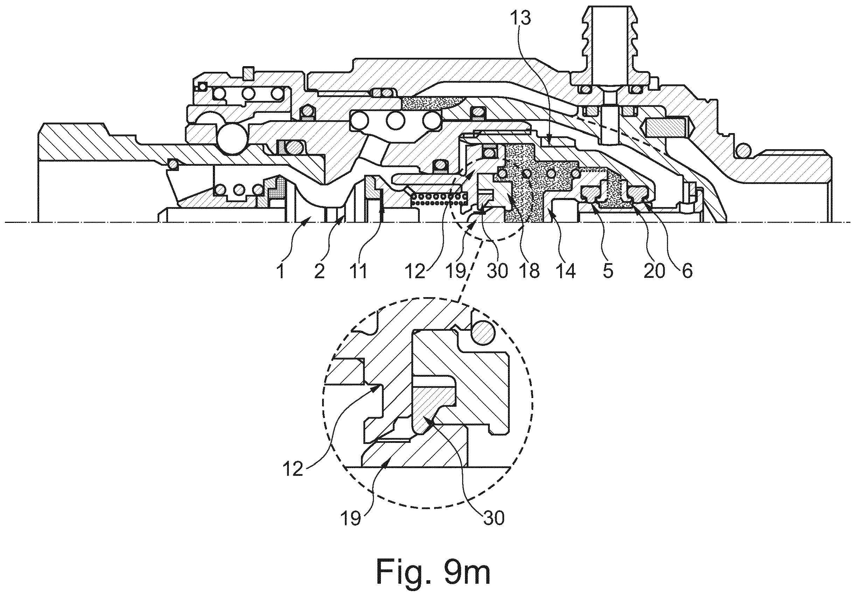

At this point the main flow of oil, which is moving from the female coupling to the male fitting, causes the micro-valve **19** to rest on the compensator **18,** closing the decompression chamber and preventing the slider **12** from moving backwards. Indeed, by observing figure **9****,** it can be seen how that the decompression chamber contains pressurised fluid.

The blocking, with a hydraulic system comprising of the decompression chamber with micro-valve **19,** of the slider **12,** also ensures that the valve-guide **11** and, consequently, the main valves **1** and **2** remain in an open position thus always guaranteeing the flow of main oil and allowing the operator to use the tool connected to the machine.

At this stage the following scenario may arise: on completion of the work the operator switches off the machine, e.g. the tractor, and leaves the male fitting connected to the female coupling.

This scenario is illustrated in figure 9.

The pressure of the fluid inside the male and female coupling drops, as the machine's hydraulic circuit is switched off, however pressurised fluid remains in the decompression chamber defined by the slider **12,** by the decompression connection **13,** by the decompression valve **14,** by the decompression gaskets **5** and **6,** by the stem **20,** by the compensator **18** and by the micro-valve **19,** indicated by the dotting in figure 9.

Any change in temperature of the entire system will result in a change in the temperature of the oil. In particular, a frequent occurrence is that the machine and the tool are left in the sun on completion of the work. An increase in the temperature of the system thus results in an increase in the temperature of the oil, and thus in an increase in the volume of the oil itself.

At this point the pressure compensation system according to this invention intervenes.

The compensator **18,** being an axially moving part, can move in an axial direction in such a way as to allow expansion of the oil thus preventing the increase in volume from resulting in an increase in pressure.

Such an increase in pressure could in fact result in breakage of or damage to one or more of the components of the fitting thus resulting in malfunction and risk to the operator.

So as to guarantee that the oil is sealed in the decompression chamber, the gasket is placed in the decompression chamber **30.** It is in fact necessary for the decompression chamber to be pressure sealed as, in the event of leaks, there could be a risk that on initial pressurisation of the slider **12,** the valve-guide **11** and the valves **1** and **2** could move backwards thus preventing the oil from passing.

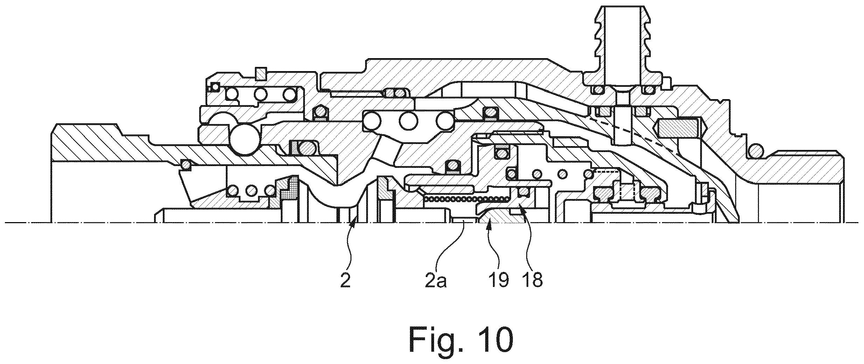

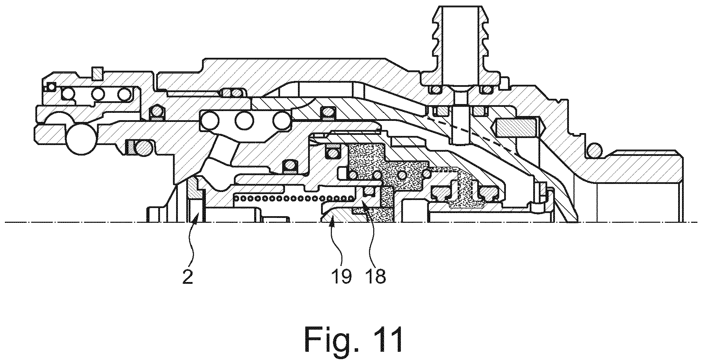

Operation of the pressure compensation system that characterises the quick coupling according to this invention, will be described in greater detail below, with particular reference to the conditions illustrated in figures **10** and **11****.**

With particular reference to figure **10****,** it should be noted that the pressure compensation system according to this invention further comprises a spacer component **2a** that is firmly attached to the body of the main valve **2** of the female coupling.

In particular, said main valve **2** will comprise of a front part to be used to achieve the seal and thus to close the female coupling, and a posterior part, that extends towards said micro-valve **19** with said spacer **2a.** In the preferred embodiment shown in the accompanying drawings provided as a non-exhaustive example of this invention, said spacer is "pin" shaped, i.e. it has an essentially cylindrical body with develop in primarily longitudinal axial direction.

The presence of this spacer, or "pin", constitutes a safety element in the event in which the operator should pressurise the apparatus multiple times; e.g. on different days thus alternating periods of operation and periods of inactivity of the apparatus without discharging the oil from the fitting, thus resulting in an increase in the volume of oil in the female coupling progressively resulting in the increase in the volume as set out in the previous condition.

The compensator **18** and the micro-valve **19** axially by effect of the increase in volume of the oil contained in the decompression chamber, in particular these will be pushed towards the anterior part of the fitting, i.e. towards the main valve of the female coupling **2.**

The compensator **18** and micro-valve **19** translate, pushed by the pressure of the fluid until they come into contact with said micro-valve **19** and the spacer pin **2a** that extends behind the main valve **2.**

At this point the micro-valve **19** is axially blocked by the spacer pin **2a,** while the compensator **18** is still able to move forward. A passage for the oil thus opens up between the compensator **18** and micro-valve **19,** thus resulting in discharge of the pressure of the oil in the decompression chamber.

This open valve scenario is shown in figure 10, where it can be seen that the decompression chamber no longer contains pressurised fluid (there is no dotted area indicating pressurised fluid).

The spacer or pin **2a** thus acts as an additional security system.

When an increase in the temperature of the fluid should result in an increase in the volume of the fluid to the extent that it should render inadequate the compensation system for the volume of the decompression chamber comprising of the possibility for the compensator **18** to slide axially together with the micro-valve **19** eliminating the increase in pressure of the fluid while proportionally increasing the volume of the chambers in which it is contained, stroke of the micro-valve **19** is restricted by the presence of the spacer or pin **2a,** which causes the micro-valve **19** to open when the compensator **18** has achieved its maximum axial movement.

The foregoing study of the pressure compensation system, which comprises a decompression chamber, an axially moving compensator, a micro-valve that moves in respect of said compensator and a security spacer or pin, has been designed so as to be effective even if only the female coupling, disconnected from the male fitting, should be pressurised and, should subsequently be subject to changes in temperature resulting in an increase in the volume of the fluid. This specific scenario is illustrated in figure 11.

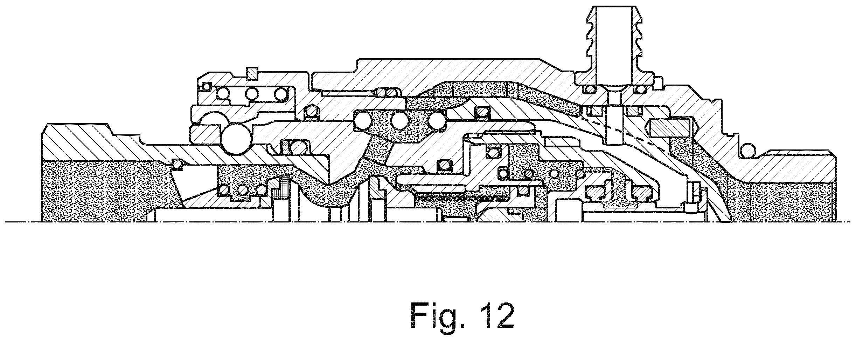

Figures 12 to 17 provide a detailed illustration of the disconnection stages of the quick coupling according to this invention;

Figure 12 shows the fitting according to this invention with the male fitting **100** and the female coupling **200** connected.

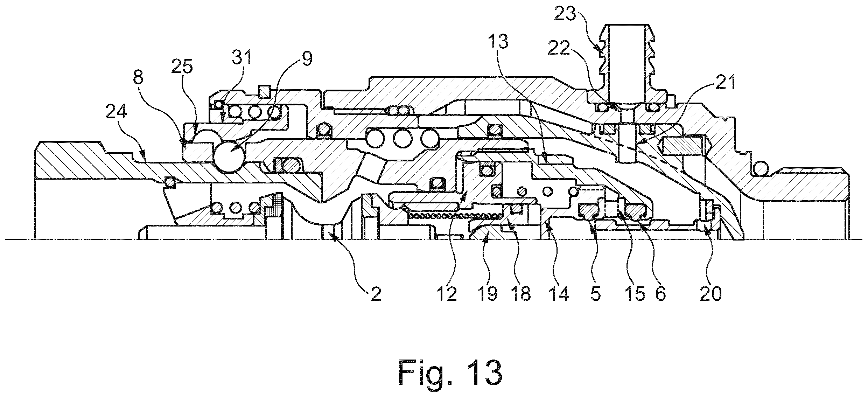

Figure 13 shows a first disconnection stage of the male fitting from the female coupling when each fitting still contains pressurised fluid.

In this stage the body of the male fitting **24** drags a group of components comprising the ball housing **8,** the balls **9,** the ring nut slider **25,** the decompression connection **13,** the decompression valve **14,** the spacer for the decompression gaskets **15,** the decompression gaskets **5** and **6,** the slider **12,** the compensator **18,** the micro-valve **19,** and the main valve of the female coupling **2** until it reaches a mechanical stop when the ring nut slider **25** comes into contact with the ring **31.**

Note that the decompression gaskets are uncovered. This results in the pressure inside the fittings being discharged and in the oil being released through the stem **20,** the inner body **21,** the adaptor **22** and the oil-collector **23** until it reaches the tractor in the same way as takes place during connection.

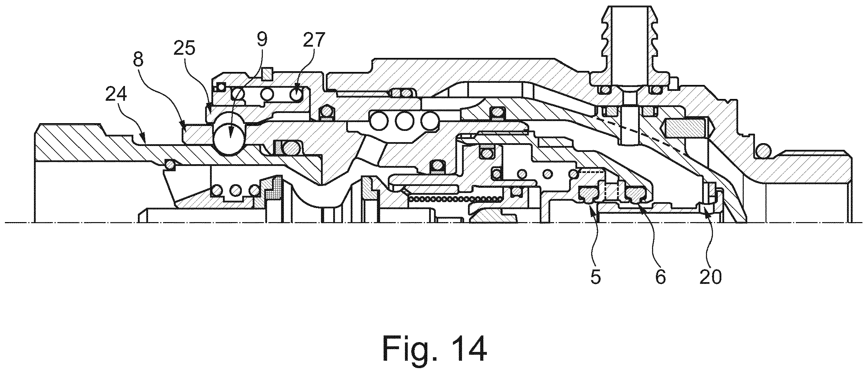

Figure 14 shows a further disconnection stage, in which the friction arising from the pressure previously existing between the following components: ball housing **8,** balls **9,** ring nut slider **25** and body of the male fitting **24,** is eliminated as the pressure has been discharged by the fact that there is no seal between the decompression gaskets **5** and **6** on the stem **20.**

Elimination of the friction results in repositioning of the ring nut slider **25** by the spring **27.**

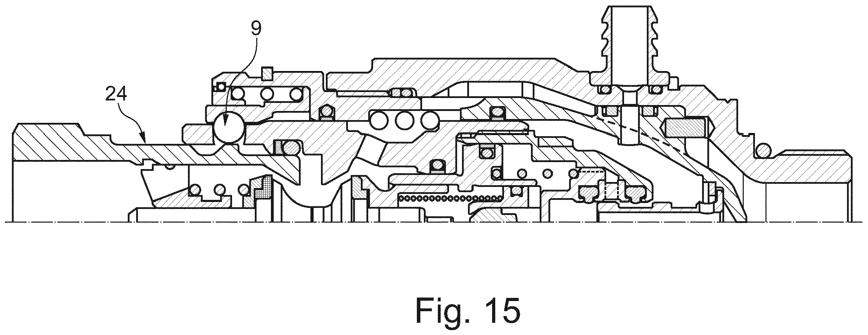

Figure 15 shows how the body of the male fitting **24** pushes the balls **9** in a radial direction. At this point the male fitting is no longer coupled with the female part.

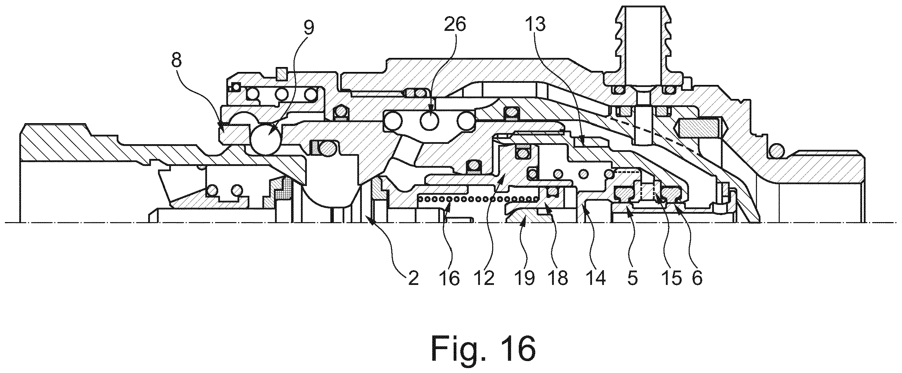

Figure 16 shows how, thanks to the spring **26,** the below components: ball housing **8,** balls **9,** decompression connection **13,** spacer for the decompression gaskets **15,** decompression gaskets **5** and **6,** decompression valve **14,** compensator **18,** micro-valve **19** and slider **12,** return to position. The spring **16** simultaneously returns the valve **2** to a closed position.

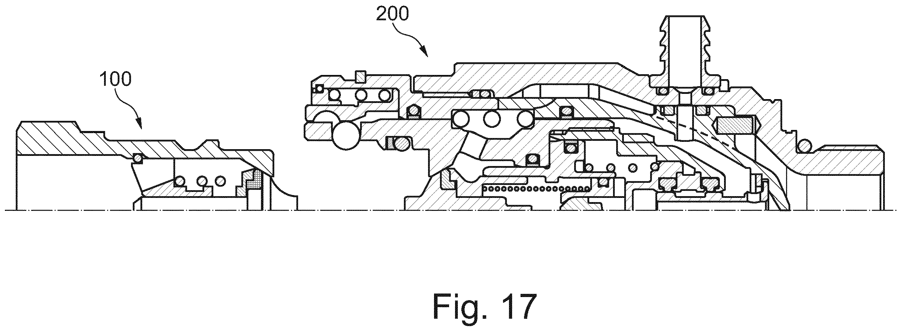

Figure 17 shows the fittings in an uncoupled state.

Figures 1m to 9m, where the letter 'm' stands for 'membrane', as will become clear below, show a second embodiment for the quick coupling with pressure compensation system according to this invention.

In this second embodiment, the quick coupling according to this invention comprises a pressure compensation system comprising a membrane in an elastically deformable material that creates a seal when it comes into contact with a micro-valve placed in an axial position within the female coupling. The micro-valve has characteristics that are essentially in line with those of the micro-valve that is part of the pressure compensation system shown in the first embodiment of the invention.

Figure 1m show the interchangeable male fitting **100** and the female coupling **200** in an uncoupled state.

Figure 2m shows the male fitting and the female coupling in a first connection stage. Both fitting are deemed as having been subject to internal pressure, as shown in the dotted areas of the figures. The main valves of the male fitting **1** and of the female coupling **2** are pushed by the hydrostatic pressure, and are in reciprocal contact during this stage.

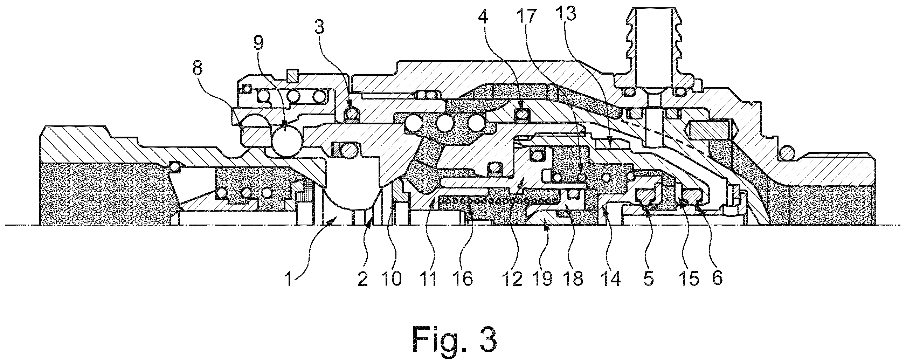

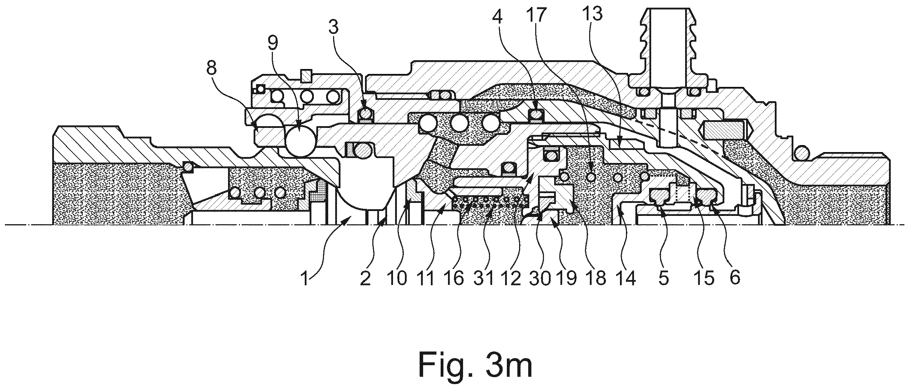

Figure 3m shows a further connection stage.

Gaskets **3** and **4** operate on the same diameters. The same applies to the decompression gaskets **5** and **6.** This characteristic allows all hydraulic thrusts inside the female coupling to be eliminated with the exception of the thrust that acts on the main vale **2** of the female coupling.

The main valve **1** of the male fitting exerts pushing action on the main valve **2** of the female coupling and the pressure inside the female coupling causes the below components to move: ball housing **8,** balls **9,** gasket **10** of the main valve **2,** valve-guide **11** of the main valve **2,** slider **12,** decompression connection **13,** decompression valve **14,** spacer for the decompression gaskets **15,** decompression gaskets **5** and **6,** springs **16** and **31,** spring **17,** valve-guide **18'** of the micro-valve **19',** micro-valve **19** and membrane **30.**

Figure 4m shows that the decompression gaskets **5** and **6** of the female coupling are uncovered thus eliminating the pressure inside the female coupling. The oil is released through the stem **20,** the inner body **21,** the adaptor **22** and the oil-collector **23** until it reaches the tank of the tractor, or in general of the machine comprising the hydraulic circuit that pressures the oil.

In this connection stage, only the male fitting contains pressurised fluid. The area containing pressurised fluid is highlighted by the dotted area.

Figure 5m shows the below components having reached the end stop position: ball housing **8,** slider **12,** decompression connection **13,** decompression valve **14,** spacer for the decompression gaskets **15,** valve-guide **18'** of the micro-valve **19',** membrane **30** and micro-valve **19.** The mechanical stop that determines the said end stop arises from contact between the decompression connection **13** and the inner body **21.**

In this stage, it can clearly be seen that the decompression gaskets **5** and **6** have not been recovered and that the main valve **2** of the female coupling is beginning to open.

Figure 6m shows how the body of the male fitting **24** pushes the balls **9** in a radial direction. The inclined surface of the ring nut slider **25** causes the latter to move in a direction opposite to that of the male fitting. The below group of components:

valve **2,** gasket **10** and valve-guide **11** come into contact with the slider **12** thus resulting in a backwards movement.

Figure 7m shows the male and female coupling in a connected state. The below group of components: ball housing **8,** decompression connection **13,** decompression valve **14,** spacer for the decompression gaskets **15** and decompression gaskets **5** and **6** are back in their original positions thanks to the spring **26.**

Similarly, the ring nut spacer **25** is returned to its original position by the spring **27.**

The slider **12** is in a backward position due to contact with the valve-guide **11** of the main valve **2.**

At this stage, the decompression valves **5** and **6** prevent fluid from flowing towards the tank. It should be noted that the male fitting still contains pressurised fluid and that the flow of oil has been blocked as the main valve **1** of the male fitting is still closed.

Figure 8m shows the open stage of the main valve **1** of the male fitting.

By pressurising the female coupling by introducing pressurised oil into the female coupling through the adaptor **22,** the oil enters via a hole **11a** in the valve-guide **11** of the main valve **2,** moves the micro-valve **19'** and enters a chamber, known as the decompression chamber, present in the fitting and defined by the space created between the below components: slider **12,** decompression connection **13,** decompression valve **14,** decompression gaskets **5** and **6,** stem **20** and valve-guide **18'** of the micro-valve **19'.**

Said decompression chamber is the same as the chamber described in the first embodiment of this invention. As can be seen, there is a marked difference between the two pressure compensation systems in that while the first embodiment showed the use of a compensator **18** capable of axial movement in respect of the body of the female coupling **200,** the second embodiment indicated by the reference number **18'** indicates the valve-guide of the micro-valve **19'.** Both components, i.e. the compensator **18** in the first embodiment and the valve-guide **18'** in the second embodiment determine the hydraulic seal of the micro-valve **19, 19'** respectively, with which they are in contact. Nevertheless, as will become clearer below, while in the first embodiment the compensator **18** was capable of axial movement so as to determine a change in the volume of the decompression chambers and the seal or opening of the micro-valve **19** is determined by the relative ability to move of said compensator **18** in respect of said micro-valve **19,** in the second embodiment the valve-guide **18'** comes into contact with the micro-valve **19'** via the membrane, and it is the elasticity, and therefore its ability to deform under the action exerted by the pressure of the fluid, of said membrane **30** that determines the hydraulic seal or the flow of oil between the membrane **30** and the micro-valve **19** when there is pressure only in the decompression chamber, as shown in figure 9m, which will be illustrated in detail below.

Returning once again to the description of the operation of the quick coupling according to the second embodiment of this invention, when the female coupling is pressurised via the introduction of pressurised oil, said pressurised oil generates a force by virtue of the difference between the diameters of the gaskets **28** and **29.**

Said force is transmitted to the valve-guide **11** of the main valve **2** and, consequently to the main valve **2,** which being in contact with the main valve **1** of the male fitting, causes it to open.

At this point the main flow of oil, from the female coupling to the male fitting, causes the micro-valve **19'** to come into contact with the membrane **30,** with is firmly connected to said valve-guide **18'** of said micro-valve **19',** and extends therefrom towards said micro-valve **19',** closing the decompression chamber and preventing the slider **12** from moving backwards. The block, with hydraulic system, of the slider **12** also ensures that the valve-guide **11** of the main valve **2** and consequently the main valves **1** and **2** remain in a forwards position thus always guaranteeing the main flow of oil, allowing the operator, when applied to agricultural machinery for example, to use the tool connected to the machine.

As previously described in reference to the first embodiment of this invention, the following scenario may arise: on completion of the work the operator switches off the machine having the hydraulic circuit, e.g. the tractor, and leaves the male fitting connected to the female coupling. Figure 9m illustrates this scenario.

The pressure within the fittings drops and only remains within the decompression chamber, defined by the below components: slider **12,** decompression connection **13,** decompression valve **14,** decompression gaskets **5** and **6,** stem **20,** valve-guide **18'** of the micro-valve **19',** membrane **30** and micro-valve **19'.**

Any change in temperature affecting the entire system (tractor+pipes+fittings) will also have repercussion on the oil in the decompression chamber, which will tend to expansion in volume due to the increase in temperature.

At this point, the membrane **30** intervenes, which having been created in an elastic material, preferably polyurethane, is deformable under the effect of the pressurised fluid, to the extent that it allows a small quantity of oil to be drawn out on reaching a pre-set pressure while preventing said expansion from being transformed into an increase in pressure. Said increase in pressure could cause breakage or damage to one or more components of the fitting resulting in malfunction and risk to the operator, and such risks are thus averted.

Figure 9m provides a detailed illustration of the operation of the membrane system. The micro-valve **19'** is brought to rest on the slider **12** by the thrust exerted by the pressure in the decompression chamber. In this scenario, the membrane **30** seals the micro-valve **19'.** Where the pressure inside the decompression chamber should increase, e.g. due to an increase in the temperature of the fluid, the membrane **30** starts to deform, to the extent that, having reached a pre-set pressure differential, the seal between the micro-valve **19'** and the membrane **30** is lost. At this point, a small quantity of oil will be drawn out towards the main chamber of the female coupling until the difference in pressure between the two chambers is matched.

One or more millings may be created on said micro-valve **19',** in particular, in the example shown in the accompanying figures 27-30 there are two millings, to allow the flow of the aforementioned quantity of oil between the micro-valve **19'** and the slider **12,** so as to prevent the membrane from creating a seal for a longer period of time than envisaged by the project stage, which could result in the aforementioned problem.

Figure 31 is a section view of the membrane 30 according to the second embodiment of this invention.

Figures 20 to 22 show several views of the compensator 18 according to the first embodiment of this invention.

Figures 23 to 26 show several views of the micro-valve 19 according to the first embodiment of this invention.

The system according to this second embodiment of the invention also ensures the ongoing presence of a given quantity of oil in the decompression chamber, which serves to prevent the spacer **12,** the valve-guide **11** and the main valves **1** and **2** from moving backwards thus preventing the flow of oil on first pressurisation. It should be noted that this decompression system, based on the presence of a membrane, which creates a hydraulic seal on a micro-valve, has been designed and created in such a way as to ensure efficacy even in the event that only the uncoupled female coupling is pressurised and should undergo changes in temperature.

Disconnection of the male fitting from the female coupling via the membrane system takes place in exactly the same way as illustrated above with reference to the first preferred embodiment of this invention. There is therefore no need to repeat the detailed description of the individual disconnection stages.

It has thus been shown how the quick coupling according to this invention overcomes the unresolved drawbacks of the fittings known to the prior art.

Of the other benefits, it has in particular been shown how the quick coupling equipped with a pressure compensation system according to this invention prevents the problems linked to an increase in the volume of the oil within the fitting when affected by a change in temperature, caused by example by the fact that the machine is left connected to the equipment and exposed to the sun when not in use.

The quick coupling according to this invention prevents an increase in temperature of the oil trapped inside the fitting, an increase in temperature that translates into an increase of the volume thereof, from generating a pressure level that could damage the fitting itself.

A number of changes can be made by the sector profession without straying from the scope of protection pursuant to this invention.

The scope of protection of the claims should not therefore be restricted to the drawings or to the preferred embodiments provided in the description by way of example, indeed the claims should include all the new features of this invention that may be patented, including all those features that a sector technician would deem to be equivalent.

## Claims

1. Quick coupling comprising a male fitting (100) and a female coupling (200) for the hydraulic connection of a pressurised fluid line, said male fitting (100) comprising, within a main body of the male fitting, a main valve (1) of the male fitting for the closing/opening of the hydraulic line of said male fitting and said female coupling (200) comprising, within a main body of the female coupling, a main valve (2) of the female coupling for the closing/opening of the hydraulic line of said female coupling, comprising at least one decompression chamber, which, when the fitting connects the hydraulic line and pressurised fluid flows within, is filled by said pressurised fluid so that said pressurised fluid inside said decompression chamber creates a hydraulic lock adapted to keep said main valves (1, 2) of said male and female couplings in an open position, and further comprising a system for the compensation of the changes in pressure of the residual fluid that remains contained in said decompression chamber when pressurised fluid no longer flows within said fitting, **characterized in that** said compensation system for changes in pressure comprises at least one compensator element (18), that moves axially in respect of the body of said female coupling adapted to translate by effect of an increase in the pressure of the fluid inside said decompression chamber, increasing the volume of said decompression chamber, said system for the compensation of changes in pressure of the fluid contained within the decompression chamber further comprising a micro-valve (19) that is internally positioned in said compensator element in an axial position and moves axially in respect of said element and the body of the female coupling (200), the contact between said micro-valve (19) and said compensator (18), thus creating a hydraulic seal in respect of said decompression chamber.

2. Quick coupling according to the preceding claim, **characterised in that** said decompression chamber is defined, within said female coupling (200), by a plurality of internal components of the fitting and by said system for the compensation of the changes in pressure of the fluid contained in said decompression chamber.

3. Quick coupling according to the preceding claim, **characterised in that** said main valve (2) of said female coupling comprises a posterior spacer (2a) that axially extends from the portion of said valve that faces the interior of the body of said female coupling, said spacer coming into contact with said micro-valve (19) so as to create an end-stop for said micro-valve (19) when said valve translates, pushed by the pressure of the fluid inside said decompression chamber.

4. Quick coupling according to claim 1, **characterised in that** said compensation system for changes in pressure comprises one valve-guide (18') of the micro-valve (19), axially placed within said female coupling (200), each moving axially in respect of the body of said female body, said micro-valve (19) being placed inside said valve-guide (18') and being free to translate by effect of the thrust of the fluid guided by said valve-guide (18'), in respect of which it moves axially, and by the fact that it also comprises a deformable membrane (30) that is integral to said valve-guide (18') and is suitable for coming into contact with said micro-valve (19) thus creating a hydraulic seal for said decompression chamber.

5. Quick coupling according to the preceding claim, **characterised in that** said membrane (30) has been created from an elastic material and suitably designed to deform on the thrust of the pressurised fluid inside the decompression chamber, allowing pressurised fluid to be drawn out and reducing the pressure of the fluid in the decompression chamber.

## Patentansprüche

1. Schnellkupplung mit einem männlichen Anschlussstück (100) und einem weiblichen Kupplungsstück (200) zur hydraulischen Verbindung einer druckbeaufschlagten Fluidleitung, wobei das männliche Anschlussstück (100) in seinem Grundkörper ein Hauptventil (1) des männlichen Anschlussstücks zum Öffnen / Schließen der Hydraulikleitung des männlichen Anschlussstücks aufweist und das weibliche Kupplungsstück (200) in seinem Grundkörper ein Hauptventil (2) des weiblichen Kupplungsstücks zum Öffnen / Schließen der Hydraulikleitung des weiblichen Kupplungsstücks aufweist, und mit zumindest einer Dekompressionskammer, die, wenn das Anschlussstück die Hydraulikleitung verbindet und druckbeaufschlagtes Fluid hineinfließt, mit dem druckbeaufschlagten Fluid gefüllt wird, so dass das druckbeaufschlagte Fluid in der Dekompressionskammer eine hydraulische Sperre erzeugt, die geeignet ist die Hauptventile (1, 2) der männlichen und weiblichen Kupplungsstücke in einer geöffneten Position zu halten, zudem aufweisend ein System zur Kompensation von Druckschwankungen des in der Dekompressionskammer enthaltenen Restfluids, die auftreten, wenn druckbeaufschlagtes Fluid nicht weiter in das Anschlussstück fließt, **dadurch gekennzeichnet,**
**dass** das Kompensationssystem für Druckschwankungen zumindest ein Kompensationselement (18) aufweist, das sich bezüglich dem Körper des weiblichen Kupplungsstücks axial bewegt und geeignet ist, einen Druckanstieg des Fluids in der Dekompressionskammer in eine Volumenvergrößerung der Dekompressionskammer umzusetzen, wobei das System zur Kompensation von Druckschwankungen des in der Dekompressionskammer enthaltenen Fluids zudem ein Mikroventil (19) aufweist, das innerhalb des Kompensationselements in einer axialen Lage positioniert ist und sich bezüglich dem Element und dem Körper des weiblichen Kupplungsstücks (200) axial bewegt, womit der Kontakt zwischen dem Mikroventil (19) und dem Kompensationselement (18) somit eine hydraulische Sperre gegenüber der Dekompressionskammer erzeugt.

2. Schnellkupplung gemäß dem vorigen Anspruch, **dadurch gekennzeichnet, dass** die Dekompressionskammer in dem weiblichen Kupplungsstück (200) durch eine Vielzahl interner Komponenten des Anschlussstücks und durch das Kompensationssystem für Druckschwankungen des in der Dekompressionskammer enthaltenen Fluids, definiert ist.

3. Schnellkupplung gemäß dem vorigen Anspruch, **dadurch gekennzeichnet, dass** das Hauptventil (2) des weiblichen Kupplungsstücks ein hinteres Distanzstück (2a) aufweist, das sich axial von dem Teil des Ventils erstreckt, welches dem Inneren des Körpers des weiblichen Kupplungsstücks zugewandt ist, wobei das Distanzstück mit dem Mikroventil (19) in Berührung kommt, sodass ein Endanschlag für das Mikroventil (19) erzeugt wird, wenn das Ventil durch den Druck des Fluids in der Dekompressionskammer, verschoben wird.

4. Schnellkupplung gemäß Anspruch 1, **dadurch gekennzeichnet, dass** das Kompensationssystem für Druckschwankungen eine Ventilführung (18') des Mikroventils (19) aufweist, die axial in dem weiblichen Kupplungsstück (200) angeordnet ist, wobei sich beide gegenüber dem Körper des weiblichen Teils axial bewegen, und das Mikroventil (19) in der Ventilführung (18') angeordnet ist und frei durch Einwirkung des Drucks des durch die Ventilführung (18') geleiteten Fluids, relativ zu welcher es axial bewegt wird, verschiebbar ist, wobei es aufgrund dessen, dass es zudem eine deformierbare Membran (30) aufweist, die an der Ventilführung (18') fest angebracht und geeignet ist, mit dem Mikroventil (19) in Berührung zu kommen, eine hydraulische Abdichtung für die Dekompressionskammer erzeugt.

5. Schnellkupplung gemäß dem vorigen Anspruch, **dadurch gekennzeichnet, dass** die Membran (30), die aus einem elastischen Material hergestellt und so gestaltet ist, dass sie sich unter dem Druck des druckbeaufschlagten Fluids in der Dekompressionskammer verformt, ermöglicht, dass druckbeaufschlagtes Fluid herausgenommen wird und der Druck des Fluids in der Dekompressionskammer reduziert wird.

## Revendications

1. Accouplement rapide comprenant un raccord mâle (100) et un demi-raccord femelle (200) pour le raccordement hydraulique d'une conduite de fluide sous pression, ledit raccord mâle (100) comprenant, à l'intérieur d'un corps principal du raccord mâle, une valve principale (1) du raccord mâle pour la fermeture/l'ouverture de la conduite hydraulique dudit raccord mâle et dudit demi-raccord femelle (200) comprenant, à l'intérieur d'un corps principal du demi-raccord femelle, une valve principale (2) du demi-raccord femelle pour la fermeture/l'ouverture de la conduite hydraulique dudit demi-raccord femelle, comprenant au moins une chambre de décompression, qui, lorsque le raccord raccorde la conduite hydraulique et un fluide sous pression s'écoule à l'intérieur, est remplie par ledit fluide sous pression pour que ledit fluide sous pression à l'intérieur de ladite chambre de décompression crée un verrouillage hydraulique adapté pour maintenir ladite valve principale (1, 2) du raccord mâle et du demi-raccord femelle dans une position ouverte, et comprenant en outre un système pour la compensation des changements de pression du fluide résiduel qui reste contenu dans ladite chambre de décompression lorsqu'un fluide sous pression ne s'écoule plus à l'intérieur dudit raccord, **caractérisé en ce que** ledit système de compensation de changements de pression comprend au moins un élément compensateur (18), qui se déplace axialement par rapport au corps dudit demi-raccord femelle adapté pour se translater par effet d'une augmentation de la pression du fluide à l'intérieur de ladite chambre de décompression, augmentant le volume de ladite chambre de décompression, ledit système pour la compensation de changements de pression du fluide contenu à l'intérieur de la chambre de décompression comprenant en outre une micro-valve (19) qui est positionnée de façon interne dans ledit élément compensateur dans une position axiale et se déplace axialement par rapport audit élément et du corps du demi-raccord femelle (200), le contact entre ladite micro-valve (19) et ledit compensateur (18) créant ainsi un joint d'étanchéité hydraulique par rapport à ladite chambre de décompression.

2. Accouplement rapide selon la revendication précédente, **caractérisé en ce que** ladite chambre de décompression est définie, à l'intérieur dudit demi-raccord femelle (200), par une pluralité de composants internes du raccord et par ledit système pour la compensation des changements de pression du fluide contenu dans ladite chambre de décompression.

3. Accouplement rapide selon la revendication précédente, **caractérisé en ce que** ladite valve principale (2) dudit demi-raccord femelle comprend une entretoise postérieure (2a) qui s'étend axialement à partir de la portion de ladite valve qui fait face à l'intérieur du corps dudit demi-raccord femelle, ladite entretoise entrant en contact avec ladite micro-valve (19) afin de créer une butée de fin de course pour ladite micro-valve (19) lorsque ladite valve se translate, poussée par la pression du fluide à l'intérieur de ladite chambre de décompression.

4. Accouplement rapide selon la revendication 1, **caractérisé en ce que** ledit système de compensation de changements de pression comprend un guidage de valve (18') de la micro-valve (19), axialement placé à l'intérieur dudit demi-raccord femelle (200), chacun se déplaçant axialement par rapport au corps dudit corps femelle, ladite micro-valve (19) étant placée à l'intérieur dudit guidage de valve (18') et étant libre de se translater par effet de la poussée du fluide guidé par ledit guidage de valve (18'), par rapport auquel elle se déplace axialement, et par le fait qu'il comprend également une membrane déformable (30) qui fait partie intégrante dudit guidage de valve (18') et est appropriée pour entrer en contact avec ladite micro-valve (19), créant ainsi un joint d'étanchéité hydraulique pour ladite chambre de décompression.

5. Accouplement rapide selon la revendication précédente, **caractérisé en ce que** ladite membrane (30) a été créée à partir d'un matériau élastique et conçue de façon appropriée pour se déformer sous la poussée du fluide sous pression à l'intérieur de la chambre de décompression, permettant au fluide sous pression d'être extrait et réduisant la pression du fluide dans la chambre de décompression.
